**Europäisches Patentamt**

**European Patent Office**

**Office européen des brevets**

(19)

(11) Veröffentlichungsnummer: **0 203 934**

**B1**

# EUROPÄISCHE PATENTSCHRIFT

(12)

(45) Veröffentlichungstag der Patentschrift:
14.12.88

(51) Int. Cl.⁴: **G 01 L 3/10**

(21) Anmeldenummer: **85904971.0**

(22) Anmeldetag: **03.10.85**

(86) Internationale Anmeldenummer:
**PCT/EP 85/00516**

(87) Internationale Veröffentlichungsnummer:
**WO 86/03294 (05.06.86 Gazette 86/12)**

(54) **SCHALTUNGSANORDNUNG ZUR MESSUNG DES DREHMOMENTS.**

(30) Priorität: **22.11.84 DE 3442459**
**19.03.85 DE 3509763**

(43) Veröffentlichungstag der Anmeldung:
**10.12.86 Patentblatt 86/50**

(45) Bekanntmachung des Hinweises auf die Patenterteilung:
**14.12.88 Patentblatt 88/50**

(84) Benannte Vertragsstaaten:
**AT BE CH DE FR GB IT LI LU NL SE**

(56) Entgegenhaltungen:
**DE-B-1 183 276**

(73) Patentinhaber: **Battelle- Institut e.V., Am Römerhof 35 Postfach 900 160, D-6000 Frankfurt/Main 90 (DE)**

(72) Erfinder: **GERRATH, Karl- Heinz, Lindenweg 2, D-6103 Griesheim (DE)**
Erfinder: **STRAUSS, Eberhard, Bessungerstrasse 15, D-6103 Griesheim (DE)**
Erfinder: **DECKER, Hans- Joachim, Breitenbachstrasse 63, D-6200 Wiesbaden (DE)**
Erfinder: **VINSON, Heinz, Wallstrasse 15, D-6070 Langen (DE)**

(74) Vertreter: **Sartorius, Peter, Dipl.- Ing., Battelle-Institut e.V. Abteilung Patente Am Römerhof 35, D-6000 Frankfurt am Main 90 (DE)**

**0 203 934**

## Beschreibung

Die Erfindung betrifft eine Schaltungsanordnung zur Messung des Drehmoments, der Drehschwingungen sowie der Leistung an mindestens einer umlaufenden Welle, mit Signalgebern und Signalaufnehmern sowie einem Multiplizierer und einer Signalauswertung.

Bei konventionellen Vorrichtungen zur Messung des Drehmoments werden auf einer Welle befestigte Dehnungsmesstreifen verwendet. Die wesentlichen Nachteile solcher Anordnungen bestehen in der Stromzuführung zur Meßbrücke, Auskopplung des Signals von der sich drehenden Welle und in dem hohen elektronischen Aufwand.

Neuere Entwicklungen basieren auf kontaktlos durchführbaren Verfahren. Hierbei werden z. B. magnetische Zahnräder oder Ringe aus nicht magnetischem Material, in das Dauermagnete eingebettet sind, an einer Antriebswelle in einem vorbestimmten axialen Abstand voneinander befestigt. Jeder der magnetischen Wandler erzeugt Impulse bei einer Frequenz proportional zur Drehzahl der Welle. Auf diese Weise wird das Drehmoment der Welle durch eine Zeitdifferenz zwischen Impulsen der entsprechenden Wandler ermittelt. So werden bei einem bekannten Verfahren die Anfangssignale vor dem Einwirken des Drehmoments relativ zueinander phasenverschoben. Aus den daraus gewonnenen Impulsfolgen werden durch Und-Verknüpfung die Pulsfolgen für das Drehmoment abgeleitet (DE-B-1 183 276). Drehmomentmesser dieser Art haben den wesentlichen Nachteil, daß die Meßergebnisse von Umwelteinflüssen, wie Temperatur, abhängig sind. Auch Bauelement- und Spannungsschwankungen beeinflussen das Meßergebnis. Außerdem verfälscht jede Art von Fertigungstoleranzen die Messungen. Hinzu kommt, daß zur Signalgewinnung aus der Welle Zahnräder, Ringe und dgl. angebracht werden müssen, was des öfteren eine unerwünschte Manipulationan der Welle bedeutet, an der das Drehmoment kontaktlos gemessen werden soll. Außerdem sind diese Anordnungen nur dann zur Drehmomentmessung geeignet, wenn die beiden Geber die gleiche Anzahl von Markierungen aufweisen und auf einer einzigen Welle angebracht sind. Die bekannten Schaltungsanordnungen zur Signalauswertung erlauben darüberhinaus keine genaue Erfassung von Drehschwingungen.

Der vorliegenden Erfindung liegt die Aufgabe zugrunde, die Messung des Drehmoments sowie eine genaue Erfassung von Drehschwingungen und eine einfache Ermittlung der Leistung mit einer berührungslos arbeitenden und störungsunempfindlichen Messeinrichtung unter Vermeidung der Umwelt- und materialbedingten Einflüsse auf das Ergebnis zu ermöglichen. Dabei sollten auch auf der Welle bereits vorhandene, geeignet markierte oder strukturierte Räder, Scheiben oder dgl., auch mit unterschiedlicher Anzahl von Markierungen am Umfang als Geber verwendbar sein, wobei diese nicht notwendigerweise auf einer einzigen Welle angeordnet sein müssen, sondern auch auf verschiedenen Wellen eines formschlüssig gekoppelten Wellensystems.

Diese Aufgabe ist erfindungsgemäß dadurch gelöst, daß ein Frequenzumsetzer vorgesehen ist, mit dem aus einer der Frequenzen ($f_1$ oder $f_2$) der Signale ($S_1$, $S_2$) der Signalaufnehmer ein neues Signal ($S_3$) erzeugbar ist, dessen Frequenz ($f_3$) der Summen- oder Differenzfrequenz der Frequenzen ($f_1$, $f_2$) der Signale ($S_1$, $S_2$) der Signalaufnehmer entspricht und das mit dem Signal ($S_1$ oder $S_2$), aus dem es gewonnen wird, phasenstarr verbunden ist, wobei die Zuordnung der Anfangsphase des neuen Signals ($S_3$) zum frequenzerzeugenden Signal ($S_1$ oder $S_2$) der Signalaufnehmer durch das andere Signal ($S_2$ oder $S_1$) mitbestimmt wird, und daß die Signale ($S_1$, $S_2$) der Signalaufnehmer und das Signal ($S_3$) des Frequenzumsetzers zu dem Multiplizierer geführt sind. Vorteilhafte Ausbildungen der erfindungsgemäßen Schaltungsanordnung sind in den Ansprüchen 2 bis 15 erläutert.

Die Anfangssignale $S_1$ und $S_2$ können erfindungsgemäß durch Verwendung von zwei auf einer oder auch verschiedenen Wellen befestigten Signalgebern und in der Nähe der Geber fest angeordneten, zugehörigen Sensoren gewonnen werden. Als Signalgeber können in an sich bekannter Weise Ringe eingesetzt werden, die aus nicht magnetischem Material bestehen, in das an der Ringperipherie Permanentmagnete abwechselnder Magnetisierungsrichtung eingebettet sind. Auch Zahnräder aus weichmagnetischem Material kommen in Frage. Durch die erfindungsgemäße Schaltungsanordnung können Signale aus der Drehung der Welle bzw. Wellen gewonnen werden, ohne daß notwendigerweise solche Geber montiert werden müssen. So können beliebige, an der Welle bereits vorhandene Zahnräder, Ringe, Lochscheiben, Löcher und andersartige Markierungen und dgl. verwendet werden. Dabei ist es gleichgültig, ob die Räder, Ringe usw. sowie die an dem Umfang dieser Geber vorgesehenen Markierungen gleichzahlig sind oder nicht. Die zur Drehmomentmessung herangezogenen, an der Welle vorhandenen Geber müssen auch nicht artgleich sein. Die Sensoren werden in an sich bekannter Weise entsprechend der Art der Markierungen ausgewählt und relativ zu den Signalgebern ausgerichtet. Bei Verwendung von Zahnrädern oder magnetisch markierten Ringen können z. B. Hallelemente oder Feldplatten-ifferentialfühler eingesetzt werden. Bei optischer Signalgewinnung verwendet man z. B. Lichtschranken oder dgl.

Jeder Sensor liefert an seinem Signalausgang eine Spannung, deren Verlauf durch die Einwirkung des Gebers auf den Sensor bestimmt wird. Die aus der Drehung der Welle gewonnenen, alternierenden Anfangssignale werden in an sich bekannter Weise unter Verwendung von Verstärkern und Pulsformern in jeweils eine Pulsfolge umgewandelt. Erfindungsgemäß wird dann aus den beiden Rechtecksignalen $S_1$ oder $S_2$ ein neues Signal $S_3$ erzeugt, dessen Frequenz $f_3$ der Summen- oder Differenzfrequenz der Frequenzen $f_1$ und $f_2$ der beiden Anfangssignale entspricht. Außerdem werden die Signale $S_1$, $S_2$ und $S_3$, wie im folgenden näher erläutert, zeitlich in eine bestimmte Beziehung gesetzt. Zu diesem Zweck kann z. B. ein direkt teilender Frequenzteiler oder ein Frequenzteiler mit einer Phasenregelschleife verwendet werden.

2

Das neue Signal $S_3$ wird anschließend mit den Anfangssignalen $S_1$ und $S_2$ multipliziert. Das Maß für die torsionsbedingte Verdrehung der Signalgeber zueinander, aus dem dann das Drehschwingungssignal abgeleitet werden kann, wird aus der Integration des vom Multiplizierer gelieferten Signals $S_1.S_2.S_3$ über eine oder mehrere der kleinsten gemeinsamen Periodendauer der Frequenzen $f_1$, $f_2$ und $f_3$ oder durch geeignete Filterung ermittelt. Zur Filterung wird vorzugsweise ein digitales Filter vorgeschlagen, das dem vom Multiplizierer gelieferten Signal $S_1.S_2.S_3$ speziell angepaßt ist. Das Ergebnis kann auch durch Spektralanalyse des Signals $S_1.S_2.S_3$ erhalten werden.

Die Leistung läßt sich in an sich bekannter Weise durch Multiplikation des Drehmoments mit der Winkelgeschwindigkeit der entsprechenden Welle bestimmen. Die erfindungsgemäße Schaltungsanordnung ermöglicht auch eine Leistungsbestimmung durch Addition der in einer bestimmten Zeiteinheit anfallenden Drehmomentwerte.

Durch die erfindungsgemäße Signalverarbeitung lassen sich die Störeffekte und Umgebungseinflüsse eliminieren. Insbesondere wird der Einfluß von Gleichspannungsdriften und Gruppenlaufzeitverzerrungen von Sensoren und Verstärkern unterdrückt. Ferner ist eine zusätzliche Anbringung von Gebern an der zu vermessenden Welle nicht mehr notwendig, falls als Geber wirkende Markierungen, wie Zahnräder, Scheiben und dgl. bereits vorhanden sind.

Weitere Merkmale, Einzelheiten und Vorteile der Erfindung ergeben sich aus der folgenden Beschreibung sowie anhand der schematischen Zeichnung. Hierbei zeigen

Fig. 1 ein besonders vorteilhaftes Beispiel der Signalverläufe bei der erfindungsgemäßen Schaltungsanordnung und die Signalauswertung zur Ermittlung des Drehmoments;

Fig. 2 die Abhängigkeit des Endsignals von einer Verdrehung der Gebermarkierungen zueinander am Beispiel der Fig. 1;

Fig. 3 die Darstellung der Kompensation von Störeffekten bei einem Signalverlauf gemäß Fig. 1;

Fig. 4 ein weiteres Beispiel der Signalverläufe und Signalauswertung;

Fig. 5 die Abhängigkeit des Endsignals von der Verdrehung der Gebermarkierungen zueinander am Beispiel der Fig. 4;

Fig. 6 die Kompensation von Störeffekten bei einem Signalverlauf gemäß Fig. 4;

Fig. 7 a) und b) eine mögliche Schaltungsanordnung nach der Erfindung;

Fig. 8 ein Prinzipschaltbild eines möglichen Aufbaus des Frequenzumsetzers;

Fig. 9 a) und b) die schaltungsmäßige Realisierung des Frequenzumsetzers;

Fig. 10 die Signalabläufe in der Schaltung gemäß Fig. 9;

Fig. 11 die Abtastzeitpunkte des digitalen Filters für das Signal $S_1.S_2.S_3$;

Fig. 12 eine Ausführungsform für die schaltungsmäßige Realisierung des digitalen Filters und

Fig. 13 schematisch das Verhalten des digitalen Filters.

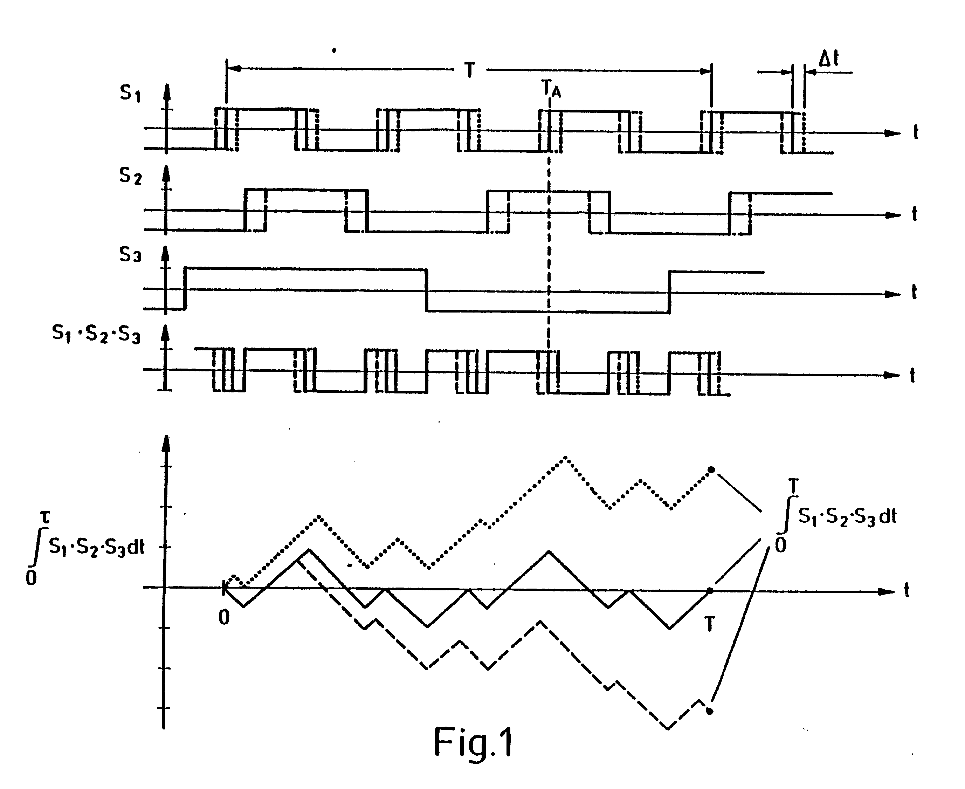

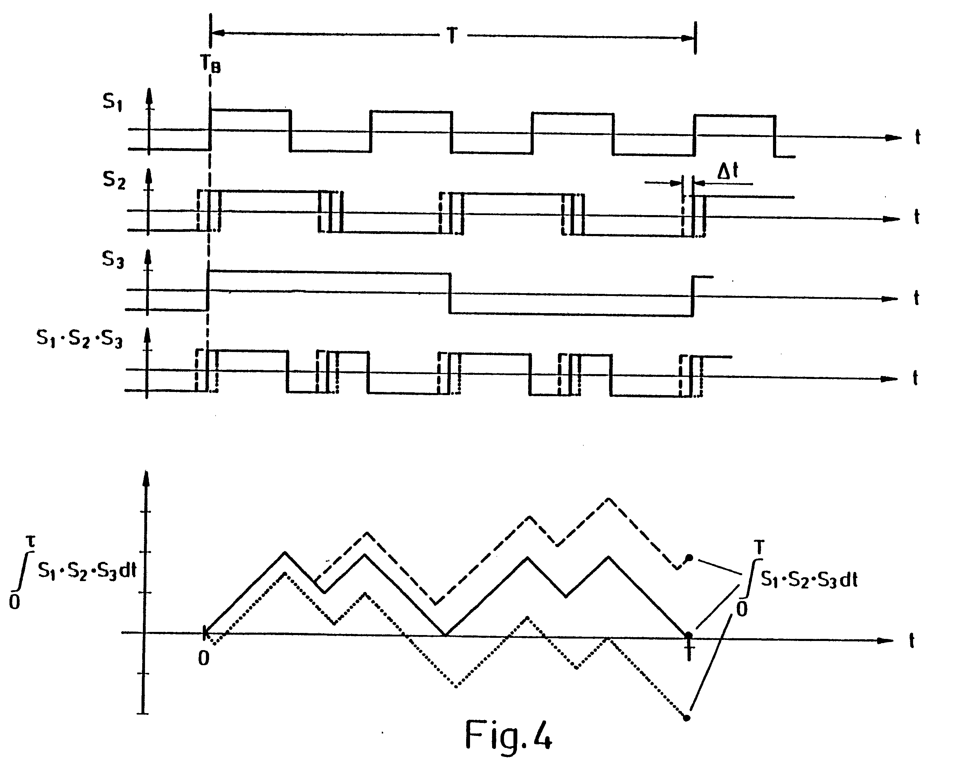

In den Beispielen gemäß Fig. 1 und Fig. 4 wird angenommen, daß die Frequenz $f_2$ des Anfangssignals $S_2$ kleiner oder höchstens gleich der Frequenz $f_1$ des anderen Anfangssignals $S_1$ ist. Die Frequenzen $f_1$ und $f_2$ der Anfangssignale $S_1$ und $S_2$ können geradzahlige oder ungeradzahlige Vielfache der Grundfrequenz $f_0$ sein. Die Grundfrequenz $f_0$ bestimmt sich aus dem Kehrwert der kleinsten gemeinsamen Periodendauer $T$ der Anfangssignale $S_1$ und $S_2$. Gemäß Fig. 1 fällt im unbelasteten Zustand der Welle oder Wellen ein Nulldurchgang der Pulsfolge des Signals $S_1$ und die Pulsmitte des anderen Signals $S_2$ mindestens einmal während der kleinsten gemeinsamen Periodendauer $T$ in einem bestimmten Zeitpunkt $T_A$ im wesentlichen zusammen. Dabei ist der Nulldurchgang jener Pulsfolge $S_1$ zugeordnet, die die ungeradzahlige Frequenz $f_1$ aufweist. Aus der Pulsfolge $S_2$ wird die Pulsfolge $S_3$ erzeugt, deren Frequenz $f_3$ der Summen- oder Differenzfrequenz der beiden Frequenzen $f_1$ und $f_2$ entspricht. In dem dargestellten Fall ist die Differenzfrequenz $f_1 - f_2$ gebildet.

Das Signal $S_3$ wird in diesem Beispiel, unabhängig von der Verdrehung der Welle oder Wellen, dem Signal $S_2$ zeitlich zugeordnet. Für höchste Empfindlichkeit muß die Pulsmitte dieser neuen Pulsfolge $S_3$ mindestens einmal während einer Periodendauer $T$ mit dem Zeitpunkt $T_A$ zusammenfallen. Aus den Pulsfolgen $S_1$, $S_2$ und $S_3$ wird durch Multiplikation eine neue Pulsfolge $S_1.S_2.S_3$ gebildet.

Das Endsignal $S_1.S_2.S_3$ wird gemäß einer Ausführungsform der Erfindung über die Zeit $T$ oder über ein Vielfaches von $T$ integriert und ergibt für den unbelasteten Zustand ein Signal, das in Fig. 1, unten, durch die ausgezogene Kurve dargestellt ist.

Gemäß einer anderen Ausführungsform kann das Endsignal $S_1.S_2.S_3$ in einem diesem Signal speziell angepassten digitalen Filter so verarbeitet werden, daß jeweils nach einer Zeit $T$ ein dem Drehmoment proportionaler Wert erhalten wird.

Bei einer torsionsbedingten Verdrehung der Welle wird ein zeitlicher Versatz $\Delta t$ der Pulsfolgen $S_1$ und $S_2$ zueinander erfolgen, die in Fig. 1 als gepunktete bzw. gestrichelte Linien in der Pulsfolge $S_1$ gezeigt ist. Dieser Versatz führt zu einer Veränderung der Endpulsfolge $S_1.S_2.S_3$. Die Integration über die Zeitspanne $T$ oder über ein Vielfaches davon ergibt die gepunktete oder die gestrichelte Kurve gemäß Fig. 1, unten. Nach der Zeit $T$ wird damit ein Ausgangswert erhalten, dessen Größe mit der torsionsbedingten Verdrehung der Welle oder Wellen im Zusammenhang steht. In gleicher Weise erhält man bei der Filterung einen Ausgangswert jeweils nach der Zeit $T$.

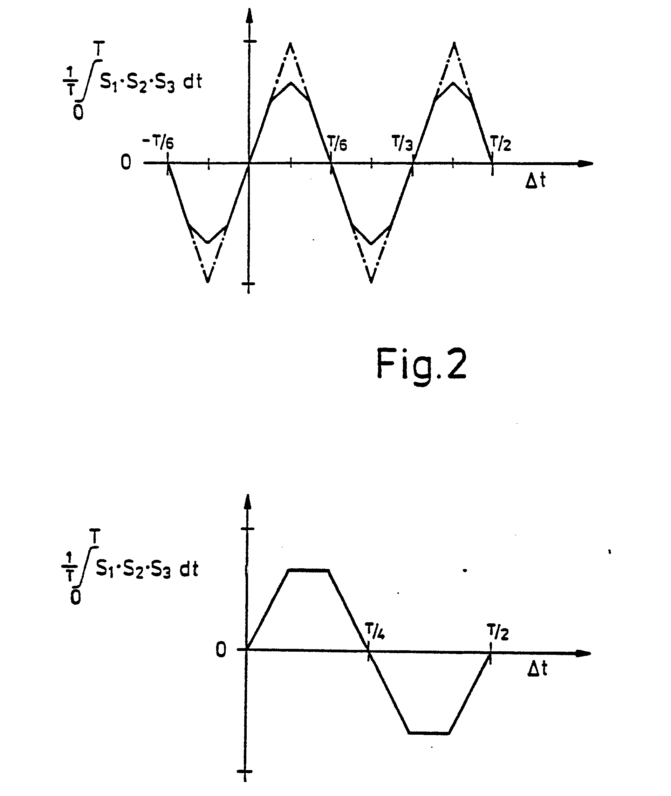

Die Beziehung zwischen dem Ausgangswert und der torsionsbedingten Verdrehung der Welle oder Wellen ist in Fig. 2 dargestellt. Ein linearer Zusammenhang zwischen dem Ausgangswert und der Verdrehung ergibt sich über Teilbereiche der Periodendauer T. Innerhalb dieser Teilbereiche kann nach entsprechender Kalibrierung ein linearer Zusammenhang zwischen dem Ausgangswert und der Verdrehung hergestellt werden. Mit Hilfe der Steifigkeitscharakteristik der Welle oder Wellen läßt sich das übertragene Drehmoment aus der ermittelten Verdrehung berechnen. Die Gesamtanzahl der Gebermarkierungen für die Kalibrierung wird in an sich bekannter Weise herangezogen. Bei einer Änderung des Tastverhältnisses in der Pulsfolge $S_2$ gemäß dem strichpunktierten Verlauf der Fig. 1 wird ein optimaler Verdrehbereich erreicht, wie es in Fig. 2 ebenfalls strichpunktiert gezeigt ist.

Ein eindeutiges Verdreh- bzw. Drehmomentsignal ist für den in Fig. 2 dargestellten Fall nur im Bereich von $\pm$ T/12 gegeben. Falls die Verdrehung bei maximal zu messendem Drehmoment größer ist als dieser Eindeutigkeitsbereich, kann durch Teilung der Ausgangsfrequenzen $f_1$ und $f_2$ die Periodendauer T erhöht und damit der Eindeutigkeitsbereich erweitert werden.

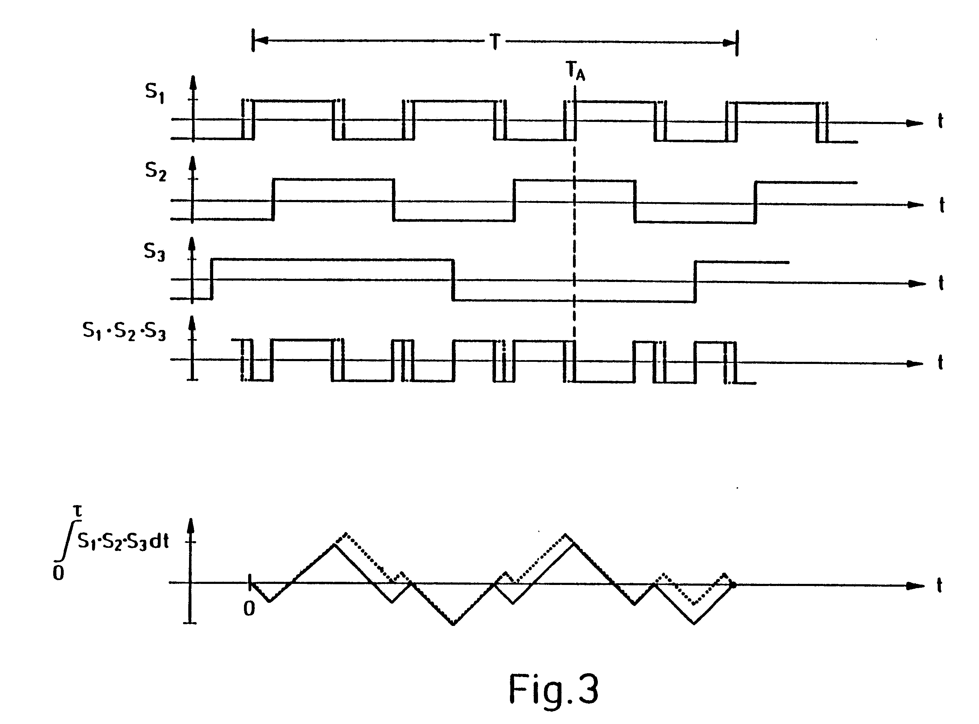

Ein Spannungsoffset bei einem Sensor oder eine Verschiebung der Schwelle der Verstärker verursacht z. B. eine Veränderung des Signalverlaufs, wie in Fig. 3 für Signal $S_1$ punktiert dargestellt ist. Eine solche Störung bewirkt eine Änderung des Signals $S_1.S_2.S_3$, hat jedoch durch die erfindungsgemäße Signalauswertung keinen Einfluß auf den Ausgangswert, der der Verdrehung proportional ist.

Für das in Fig. 4 gezeigte Beispiel gilt im wesentlichen die für Fig. 1 gegebene Erläuterung. Hier sind die Signalverläufe $S_1$ und $S_2$ insofern anders, als im unbelasteten Zustand der Nulldurchgang des Signals $S_1$ und der Nulldurchgang des anderen Signals $S_2$ zum Zeitpunkt $T_B$ in etwa zusammenfallen. Der Nulldurchgang des Signals $S_3$ ist in diesem Fall dem Nulldurchgang des Signals $S_1$ zum Zeitpunkt $T_B$ zugeordnet. Das Auftreten einer Verdrehung ist in den Signalverläufen ebenfalls mit gepunkteten bzw. gestrichelten Linien dargestellt.

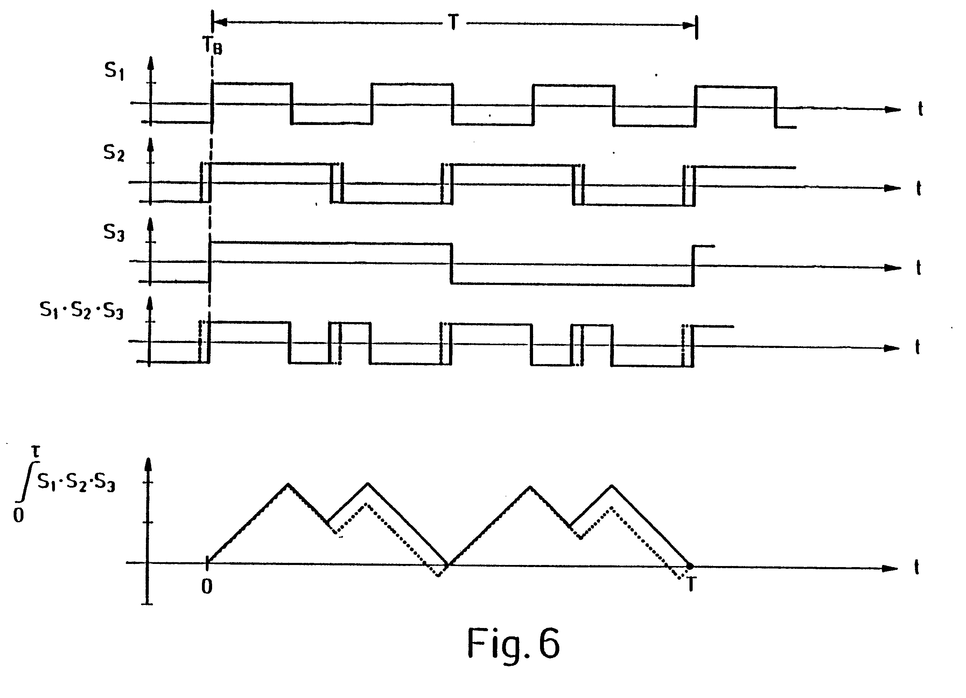

Gemäß Fig. 5 ergibt sich ebenfalls ein linearer Zusammenhang zwischen Ausgangswert der Integration und Verdrehung. Auch Fig. 6 belegt, daß im Störfall, z. B. durch ein Spannungsoffset, der Endwert nicht beeinflusst wird.

Für die erfindungsgemäß vorgeschlagene Schaltungsanordnung ist wesentlich, daß die Frequenz $f_3$ des Signals $S_3$ entweder aus der Frequenz $f_2$ des Signals $S_2$, wie in Fig. 1, oder aus der Frequenz $f_1$ des Signals $S_1$, wie in Fig. 4, erzeugt wird. Daraus ergibt sich, daß das Signal $S_3$ mit dem Signal, aus dem es gewonnen wird, phasenstarr verbunden ist. Der Frequenzumsetzer hat die Funktion, diesen Vorgang durchzuführen und zwar durch Frequenzteilung oder durch eine Kombination von Frequenzvervielfachung mit anschließender Teilung. Hierbei können zahlreiche Signale $S_3$ generiert werden, die jeweils die gleiche Frequenz $f_3$ aufweisen, jedoch sich in ihrer Phasenlage zueinander unterscheiden. Das Auswahlkriterium, welche Phasenlage des Signals $S_3$ zur weiteren Verarbeitung genutzt wird, liegt nun in der geforderten bzw. beliebig festzusetzenden zeitlichen Zuordnung des Ausgangssignals, aus dem das Signal $S_3$ erzeugt wird, zu dem anderen Ausgangssignal.

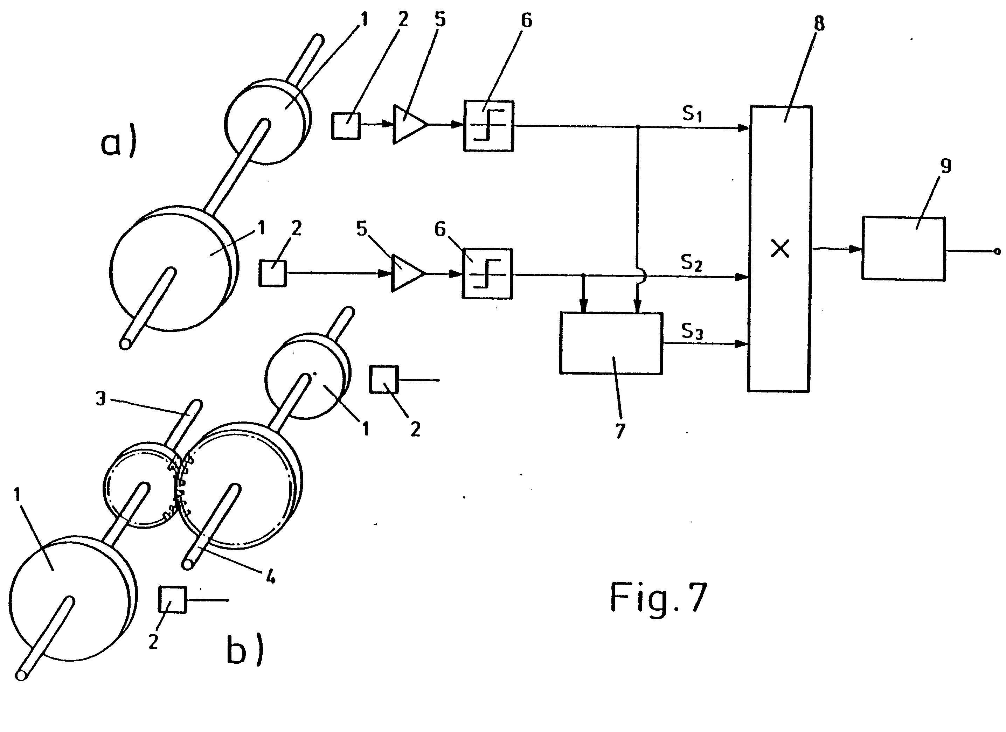

In Fig. 7 a) wird eine mögliche Schaltunganordnung nach der Erfindung gezeigt. In der Nähe der Signalgeber 1, welche in diesem Fall eine unterschiedliche Anzahl von Markierungen aufweisen und auch in ihrer Größe ungleich sind, sind Sensoren 2 angeordnet.

Wie in Fig. 7 b) gezeigt, wird bei Systemen miteinander formschlüssig gekoppelter Wellen, die z. B. auch in Schaltgetrieben vorkommen können, mindestens je ein Signalgeber 1 an je einer der Wellen 3 oder 4 vorgesehen. Als Signalgeber 1 können, wie oben beschrieben, z. B. Zahnräder verwendet werden, die sich bereits auf der Welle befinden.

Die Ausgangsspannungen der Sensoren 2 werden entsprechend den Signalen $S_1$ und $S_2$ mit Frequenzen $f_1$ und $f_2$, jeweils einem Verstärker 5 und dann einem Pulsformer 6 zugeführt. Einem der Verstärker 5 kann bei Bedarf ein Laufzeitentzerrer nachgeschaltet sein, um unterschiedliche Signallaufzeiten vom Signalgeber 1 bis zum Multiplizierer 8 zwischen den beiden Signalzweigen auszugleichen. Dies wird bei ungleichem Verhalten bezüglich des Frequenzganges bei den Sensoren 2, den Verstärkern 5 und den Pulsformern 6 notwendig sein, als auch beim unterschiedlichen Einfluß von Hystereseeffekten beim Signalgeber 1 oder Sensor 2 oder bei einem unsymmetrischen Umschaltverhalten des Multiplizierers 8.

Sollen beide Drehrichtungen ausgewertet werden, müssen beim Einfluß von Hysterese als auch bei unsymmetrischen Umschaltverhalten des Multiplizierers 8 für jede Drehrichtung getrennte Laufzeitentzerrer nachgeschaltet werden, um eine symmetrische Drehmomentanzeige zu erhalten.

Den Pulsformern 6 kann gegebenenfalls je ein Frequenzteiler nachgeschaltet werden, um - wie vorher erläutert - die Messung des Verdrehwinkels zu vereinfachen; z. B. durch Bereitstellung günstigerer Frequenzverhältnisse und damit ein größerer Verdrehbereich der Welle oder Wellen für die Messung genutzt werden kann.

Den Pulsformern 6 nachgeschaltet ist ein Frequenzumsetzer 1, der ein direkter Frequenzteiler oder ein Frequenzteiler mit einer Phasenregelschleife sein kann. Wesentlich ist, daß ein Signal $S_3$ erhalten wird, dessen Frequenz $f_3$ entweder der Differenzfrequenz $f_1 - f_2$ oder der Summenfrequenz $f_1 + f_2$ entspricht und die oben erläuterten Bedingungen erfüllt.

Das Signal $S_3$ wird dann in einem Multiplizierer 8 mit den Ausgangssignalen $S_1$ und $S_2$ multipliziert. Dabei ist nicht entscheidend, welche der drei Signale zuerst miteinander multipliziert werden. Am Ausgang des Multiplizierers 8 wird ein Integrator 9 vorgesehen, mit dem eine Integration über eine oder mehrere der kleinsten gemeinsamen Periodendauer T von den Pulsfolgen $S_1$, $S_2$ und $S_3$ vorgenommen wird oder ein digitales Filter.

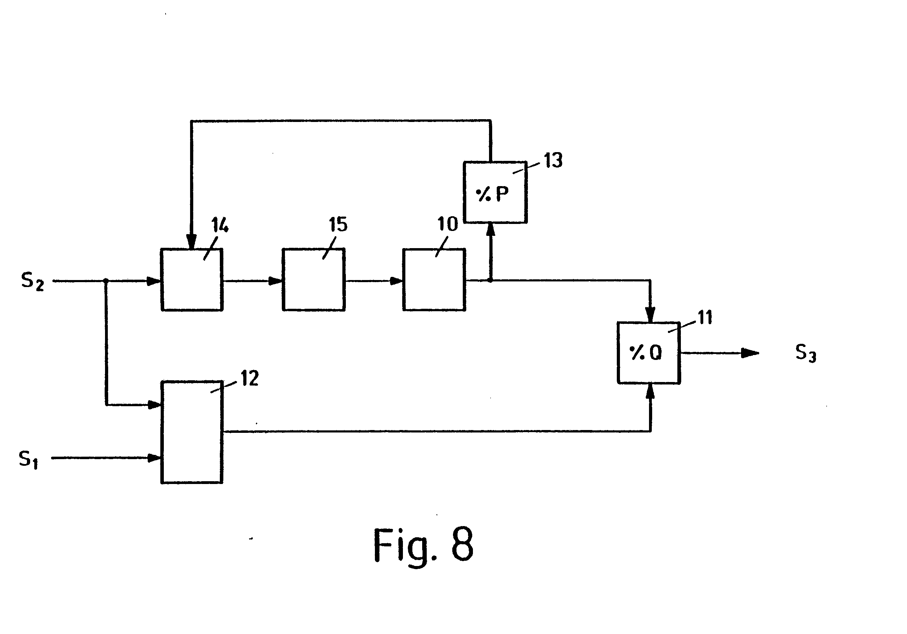

Gemäß Fig. 8 wird in dem Frequenzumsetzer 7 der Fig. 7 ein Taktgenerator 10 bei der Frequenz $P.f_2$ oder $P.f_1$ vorgesehen, der über eine Phasenregelschleife auf die Frequenz $f_2$ oder $f_1$ des Signals $S_2$ oder $S_1$

synchronisiert wird.

Im dargestellten Fall wird der Taktgenerator 10 auf die Frequenz $f_2$ synchronisiert. Die Frequenz $P.f_2$ wird durch einen direkten Frequenzteiler 11 durch die Zahl Q geteilt. Über Schaltung 12 wird die Pulsmitte des Signals $S_3$ entsprechend den gemäß Fig. 1 oder Fig. 4 gestellten Forderungen mit dem Signal $S_1$ und $S_2$ zeitlich verknüpft. Q und P sind ganze Zahlen, deren Quotient mit den Frequenzen $f_1$ und $f_2$ in folgender Beziehung steht:

$$\frac{f_1 + f_2}{f_{1\,(2)}} = \frac{P}{Q}$$

Die Phasenregelschleife besteht aus dem Taktgenerator 10, dem direkten Frequenzteiler 13, dem Phasenkomparator 14 und dem Tiefpaßfilter 15.

Bei dem in Fig. 1 dargestellten Beispiel ist das Frequenzverhältnis $f_2/f_1 = 2/3$, wobei $f_3 = f_1 - f_2$ und $f_3/f_2 = 1/2$ ist. Daraus folgt

$$\frac{f_1 - f_2}{f_2} = \frac{P}{Q} = \frac{1}{2}$$

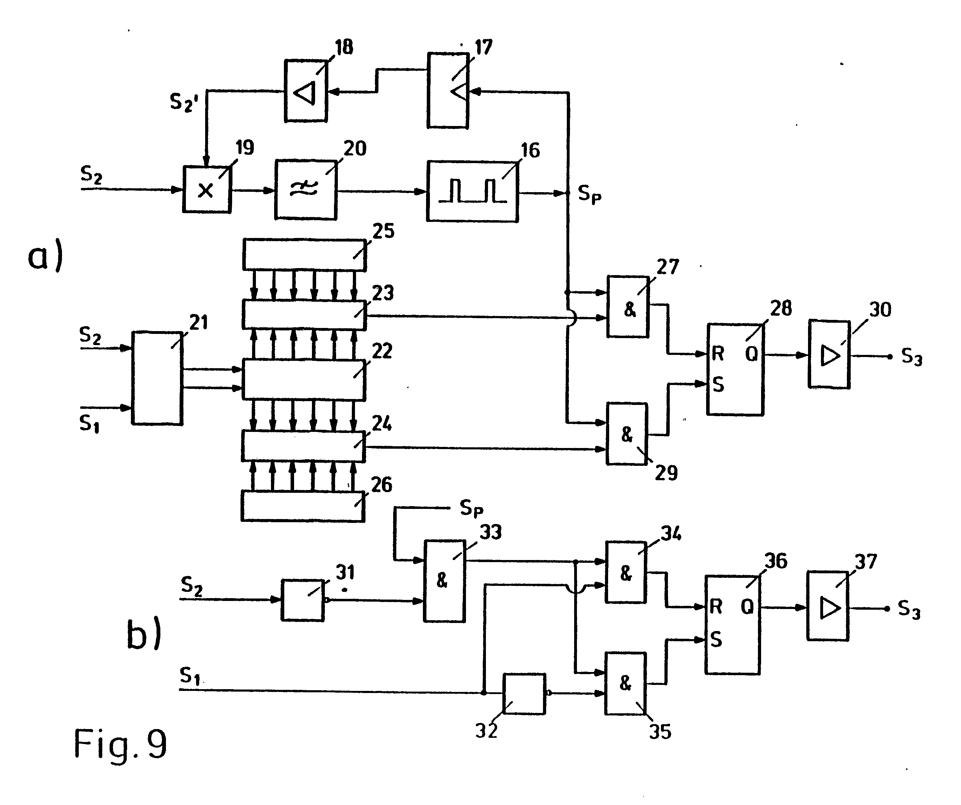

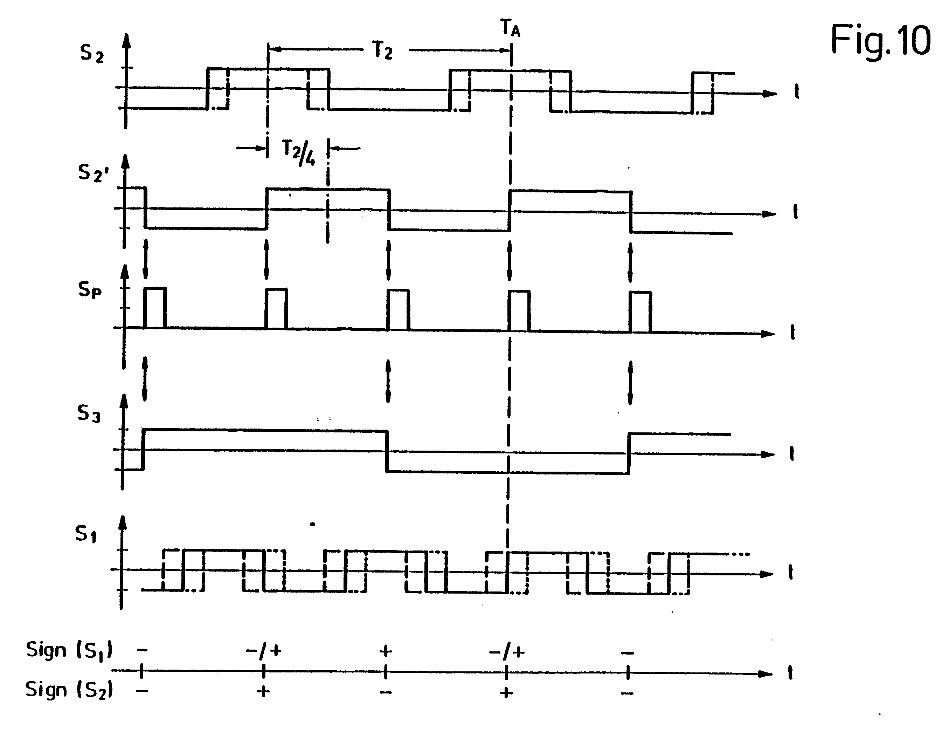

Um die geforderte Phasenzuordnung des Signals $S_3$ mit dem Signal $S_2$ zu erreichen, wird hier $P = 2$ und $Q = 4$ gewählt. Die Phasenregelschleife in der Schaltung für den Frequenzumsetzer gemäß Fig. 9 a) besteht aus einem spannungsgesteuertem Oszillator 16 mit dem Ausgangssignal $S_P$, einem Frequenzteiler 17, der in diesem Fall die Frequenz des Oszillators 16 durch $P = 2$ teilt, einem Verstärker 18, mit dem Ausgangssignal $S_2$, einem Multiplizierer 19 und einem Tiefpassfilter 20. In eingeschwungenem Zustand sind die beiden frequenzgleichen Signale $S_2$ und $S_2$ um eine Viertel Periode, d. h. 90° zueinander phasenverschoben, wie es in Fig. 10 dargestellt ist. Dabei entsprechen die Signalabläufe für $S_1$, $S_2$ und $S_3$ denen, die in Fig. 1 gezeigt sind.

Das Signal $S_3$ wird aus $S_P$ durch Frequenzteilung um den Faktor $Q = 4$ gewonnen. Ansteigende bzw. abfallende Flanken von $S_3$ werden, wie in Fig. 10 gezeigt, jeweils bei einer ansteigenden Flanke von $S_P$ erzeugt. Die Auswahl eines bestimmten Impulses $S_P$ wird hierbei durch die zeitliche Vorgeschichte von $S_1$ und $S_2$ in einer kodierten Form bestimmt.

Am Ausgang der Schaltung 21 in Fig. 9 a), die ein Flankendetektor darstellt, wird hierzu mit jeder Flanke der Signale $S_1$ oder $S_2$ ein logisches Signal derart erzeugt, daß der Ausgang der Schaltung 21 den logischen Zustand HIGH annimmt, wenn eine ansteigende Flanke von $S_1$ oder $S_2$ anliegt, oder den logischen Zustand LOW annimmt, wenn eine abfallende Flanke von $S_1$ oder $S_2$ anliegt. Nach jeder Flanke von $S_1$ oder $S_2$ wird dieses Signal mit einem von der Schaltung 27 erzeugten Taktsignal in ein Schieberegister 22 eingelesen und bereits eingelesene Signale werden um eine Speicherzelle weitergeschoben. Im Fall von Fig. 1 besteht das Schieberegister 22 aus zehn Zellen, entsprechend den zehn möglichen Signalwechseln von $S_1$ und $S_2$ innerhalb einer Periodendauer T.

Die parallelen Ausgänge des Schieberegisters 22 werden zwei digitalen Komparatoren 23 und 24 zugeführt, deren andere Eingänge liegen an den Ausgängen von zwei Speichern 25 und 26. In den Speichern 25 und 26 ist in Form eines Codes die entsprechende Folge von Signalwechseln abgelegt, nach deren Auftreten das Signal $S_3$ einen von $S_P$ gesteuerten Signalwechsel aufweist. Im vorliegenden Fall ist dies die Folge

H H L L H L H H L L

für die ansteigende Flanke von $S_3$ die im Speicher 26 abgelegt ist, und

L H H L L H H L L H

für die abfallende Flanke von $S_3$ die im Speicher 25 abgelegt ist.

Sobald die über Schaltung 21 in das Schieberegister 22 eingelesene Zeichenfolge mit der des Speichers 25 bzw. 26 übereinstimmt, wird der Ausgang des Komparators 23 bzw. 24 HIGH bis zur nächsten Signalflanke bei $S_1$ oder $S_2$. Wenn am Ausgang des Komparators 23 der Zustand HIGH anliegt, wird ein Impuls von $S_P$ über das UND-Gatter 27 zu dem R-Eingang des RS-Flipflop 28 geführt. Dieser Impuls erzeugt die abfallende Signalflanke des Signals $S_3$. Wenn am Ausgang des Komparators 24 der Zustand HIGH anliegt, wird ein Impuls von $S_P$ über das UND-Gatter 29 zu dem S-Eingang des RS-Flipflop 28 geführt, der die ansteigende Flanke von $S_3$ erzeugt. Der Verstärker 30 erzeugt aus dem Ausgangssignal des RS-Flipflop 28 das Signal $S_3$.

Eine weitere Möglichkeit zur Erzeugung des Signals $S_3$ für das in Fig. 1 dargestellte Beispiel, wird in Fig. 9 b) gezeigt. Hier wird in den Signalzweigen $S_1$ und $S_2$ je ein Inverter 31 und 32 sowie UND-Gatter 33, 34 und 35 vorgesehen. Die UND-Gattern 33, 34 und 35 leiten je nach dem Zustand der Signale $S_1$ und $S_2$ das von der Phasenregelschleife 16, 17, 18, 19, und 20 erzeugte Signal $S_P$ zu den entsprechenden Eingängen eines RS-Flipflop 36 weiter oder nicht.

Aus Fig. 1 bzw. Fig. 10 geht hervor, daß das Signal $S_3$ die ansteigende Flanke dann aufweist, wenn das Signal $S_2$ negativ und das Signal $S_1$ negativ sind, und die abfallende Flanke dann aufweist, wenn das Signal $S_2$ negativ und das Signal $S_1$ positiv sind. Gemäß Fig. 9 b) werden über einen Inverter 31 und einem UND-Gatter 33 Impulse von $S_P$ zu den UND-Gattern 34 und 35 nur dann durchgelassen, wenn das Signal $S_2$ negativ ist.

Hierbei gilt, daß der logische Zustand HIGH dann vorliegt, wenn das Signal $S_2$ bzw. $S_1$ positiv ist und der Zustand LOW dann vorliegt, wenn die Signale $S_1$ bzw. $S_2$ negativ ist. Je nach dem logischen Zustand von $S_1$, das zu dem UND-Gatter 34 und über einen Inverter 32 zu dem UND-Gatter 35 geführt wird, werden die Impulse von $S_P$ über das UND-Gatter 34, wenn das Signal $S_1$ HIGH ist, oder über das UND-Gatter 35, wenn das Signal $S_1$ LOW ist, den Eingängen des RS-Flipflop 36 geführt. Wenn der Impuls $S_P$ an den S-Eingang gelangt, wird der Q-Ausgang HIGH, kommt er an den R-Eingang an, geht der Q-Ausgang in den LOW-Zustand. Der Verstärker 37 erzeugt aus diesem logischen Signal das Wechselspannungssignal $S_3$. Bei anderen Frequenzverhältnissen und anderen Verhältnissen der Phasenzuordnung, wie z. B. in dem, in Fig. 4 dargestellten Beispiel, ist die Ausführung der Schaltung entsprechend zu modifizieren.

Bei Schaltgetrieben bleibt die einmal eingestellte Zuordnung der Signale $S_1$ und $S_2$ zueinander auch nach Aus- und Einrasten des Getriebes erhalten und damit auch die Phasenzuordnung des Signals $S_3$.

Der in Fig. 7 dem Multiplizierer 8 nachgeschaltete Integrator 9 kann in unterschiedlicher Weise realisiert werden. Es kann z. B. ein Aufwärts-Abwärts-Zähler vorgesehen sein, in dem die von einem Taktgenerator erzeugten Pulse während der Dauer eines positiven Signals $S_1.S_2.S_3$ aufwärts und während der Dauer eines negativen Signals $S_1.S_2.S_3$ abwärts gezählt werden. Der am Ausgang des digitalen Integrators nach einer Zeitdauer T gebildete Wert wird in an sich bekannter Weise durch eine der Zeitdauer T proportionale Größe dividiert, um einen dem Drehmoment proportionalen Wert zu erhalten.

Vorzugsweise wird jedoch ein digitales, dem hier vorliegenden Signalverlauf angepasstes Filter verwendet. In seiner einfachsten Art kann ein solches Filter durch die Beziehung

$$Y_n = Y_{n-1} (1 - \alpha) + (\alpha \cdot X_n)$$

beschrieben werden. Dabei bedeuten $X_n$ der Eingangswert zum Zeitpunkt $t_n$ und $Y_n$ der generierte Ausgangswert zum Zeitpunkt $t_n$. In anderen Worten entspricht X dem Signal $S_1.S_2.S_3$ am Ausgang des in Fig. 7 gezeigten Multiplizierers 8 und Y dem am Ausgangs des Filters erhaltenen, dem Drehmoment proportionalen Wert. $\alpha$ ist ein Faktor, der das Einschwingverhalten des Filters bestimmt.

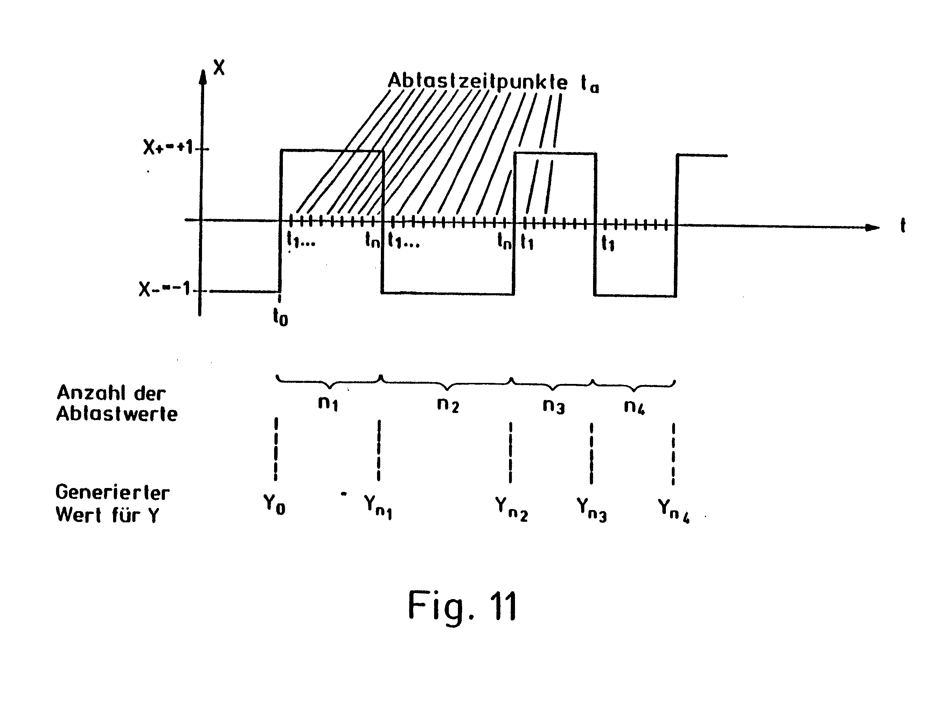

Im vorliegenden Fall ist die Eingangsfunktion dadurch gekennzeichnet, daß sie nur bestimmte Werte, z. B. $x_+ = 1$ und $x_- = 0$ oder $X_+ = +1$ und $x_- = -1$, annimmt, wie in Fig. 11 dargestellt. Zum Zeitpunkt $t_n$ ergibt sich dann für $Y_n$

$$Y_n = Y_o (1 - \alpha)^n + X_+ \cdot \alpha \sum_{m=0}^{n-1} (1 - \alpha)^m$$

Hierbei ist $Y_o$ der Anfangswert von Y zum Zeitpunkt $t_o = 0$.

Beträgt die Anzahl der Abtastwerte gerade $n_1$, so ist nach $n_1$ Werten $Y_{n_1}$

erreicht. Danach beginnt ein neuer Zyklus, bei dem jetzt $X = X_-$ zu setzen ist.

Der Anteil $\alpha \sum_{m=0}^{n-1} (1 - \alpha)^m$ läßt sich mit Hilfe der für Potenzreihen gültigen Summenformel

$$\sum_o^n q^m = \frac{1 - q^{n+1}}{1 - q}$$

wie folgt vereinfachen:

$$\alpha \cdot \sum_{m=0}^{n-1} (1 - \alpha)^m = 1 - (1 - \alpha)^n$$

Die Beziehungen für Y lassen sich damit noch umformen in

$$Y_{n_1} = X_+ + (Y_0 - X_+)(1-\alpha)^{n_1}$$

$$Y_{n_2} = X_- + (Y_{n_1} - X_-)(1-\alpha)^{n_2} \text{ usw.}$$

Damit ist die Berechnung der Ausgangswerte des Filters nur noch am Ende eines jeweiligen Zyklus, der dadurch gekennzeichnet ist, daß X jeweils konstant bleibt, notwendig.

Bei dem in Fig. 1 dargestellten Verlauf für das Signal $S_1.S_2.S_3$ sind innerhalb des kleinsten gemeinsamen Periodendauer T zwölf solche Werte zu ermitteln, aus denen dann jeweils der arithmetische Mittelwert gebildet wird, der ein sehr genaues Maß für die Verdrehung bzw. Drehmoment darstellt.

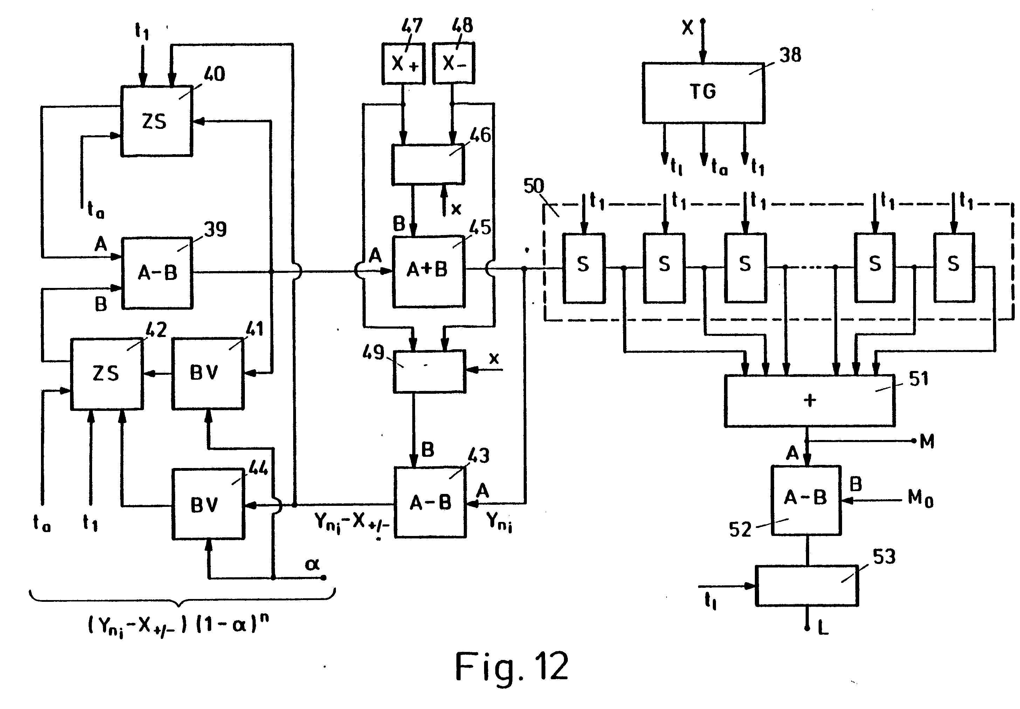

Fig. 12 zeigt eine mögliche Schaltungsanordnung zur Realisierung des Filters. Der Taktgenerator 38 erzeugt ein periodisches Abtastsignal $t_a$ derart, daß jeweils eine bestimmte Anzahl von Impulsen innerhalb der kleinsten gemeinsamen Periodendauer T des vom Multiplizierer gelieferten Signals $S_1.S_2.S_3$ anfällt. Die Anzahl der Abtastsignale $t_a$ bestimmt im Zusammenhang mit dem Faktor α das Einschwingverhalten des Filters und die Genauigkeit, mit der das Drehmomentsignal approximiert wird. Beim jeweils ersten Abtastsignal innerhalb eines Zyklus von X, d. h. wenn X von $X_-$ nach $X_+$ bzw. von $X_+$ nach $X_-$ wechselt, wird gleichzeitig das Abtastsignal $t_1$ erzeugt, wie es in Fig. 11 gezeigt ist. Mit dem Impuls $t_1$ wird die Anordnung zur Ermittlung von

$$(Y_{n_{i-1}} - X_{+/-}) \cdot (1-\alpha)^n \text{ gestartet.}$$

Der Faktor α wird als eine Potenz von 1/2 gewählt, so daß bei binärer Darstellung des Drehmomentsignals die Multiplikation mit α durch Bitverschiebung um k bit erfolgen kann. Die Multiplikation einer binären Zahl mit (1 - α) kann damit durch Subtraktion des um k bit verschobenen Wertes vom ursprünglichen Wert erfolgen. Das Ausgangssignal des Subtrahierers 39 wird hierzu über den Zwischenspeicher 40 direkt und über den Bitverschieber 41 und den Zwischenspeicher 42 um k bit verschoben bei jedem Abtastimpuls $t_a$ an die beiden Eingänge des Subtrahierers 39 zurückgeführt, so daß nach jedem Abtastimpuls $t_a$ am Ausgang des Subtrahierers 39 der mit (1 - α) multiplizierte vorhergehende Wert anliegt. Zu Beginn eines jeden Zyklus, d. h. bei $t_1$, wird der am Ausgang des Subtrahierers 43 anliegende Wert

$$(Y_{n_{i-1}} - X_+) \quad \text{bzw.} \quad (Y_{n_{i-1}} - X_-)$$

in den Zwischenspeicher 40 bzw. über Bitverschieber 44 um k bit verschoben in den Zwischenspeicher 42 geladen.

Im Addierer 45 wird zu

$$(Y_{n_{i-1}} - X_+)(1-\alpha)^{n_i}$$

bzw.

$$(Y_{n_{i-1}} - X_-)(1-\alpha)^{n_i}$$

der Wert $X_+$ bzw. $X_-$ addiert. Über den Umschalter 46 werden, je nach Zustand des Signals X, aus den Speichern 47 bzw. 48 die Werte für $X_+$ bzw. $X_-$ entnommen und dem Addierer 45 zugeführt. Am Ausgang von 45 steht damit am Ende eines jeden Zyklus der Wert

$Y_{n_i}$ zur Verfügung.

Im Subtrahierer 43 wird hiervon der Wert $X_-$ bzw. $X_+$ subtrahiert. Je nach Zustand von X wird über den Umschalter 49 der entsprechende Wert aus den Speichern 47 oder 48 entnommen. Am Ausgang des Subtrahierers 43 steht damit der Anfangswert von

$(Y_{n_i} - X_+)$ bzw. $(Y_{n_i} - X_-)$ für den nächsten Zyklus zur Verfügung.

Die Ausgangswerte des Addierers 45 werden bei Beginn eines neuen Zyklus in die erste Speicherzelle eines für diesen Fall zwölf-stufigen Schieberegisters 50 eingelesen, die zuvor eingelesenen Werte werden dabei jeweils um eine Speicherzelle weitergeschoben. Die Ausgangswerte der einzelnen Speicherzellen werden einem Addierer 51 zugeführt, an dessen Ausgang ein dem Drehmoment proportionaler Wert Y anliegt.

Zur Ermittlung der Leistung wird von den Werten M der Wert im unbelasteten Zustand Mo im Subtrahierer 52 abgezogen und diese Werte in einem Akkumulator 53 für eine bestimmte Zeit aufaddiert werden. Die Addition wird jeweils nach dem Nullsetzen des Akkumulators 53 mit dem Impuls $t_1$ des Taktgenerators 38 gestartet. Die Leistung ist proportional dem im Akkumulator 53 vor dem nächsten Nullsetzen erreichten Wert.

Andere Schaltungskonfigurationen, die den gleichen mathematischen Algorithmus bewirken, sind denkbar, z. B. Vertauschen der Reihenfolge von 41 und 42, zusammenfassen von 40 und 42.

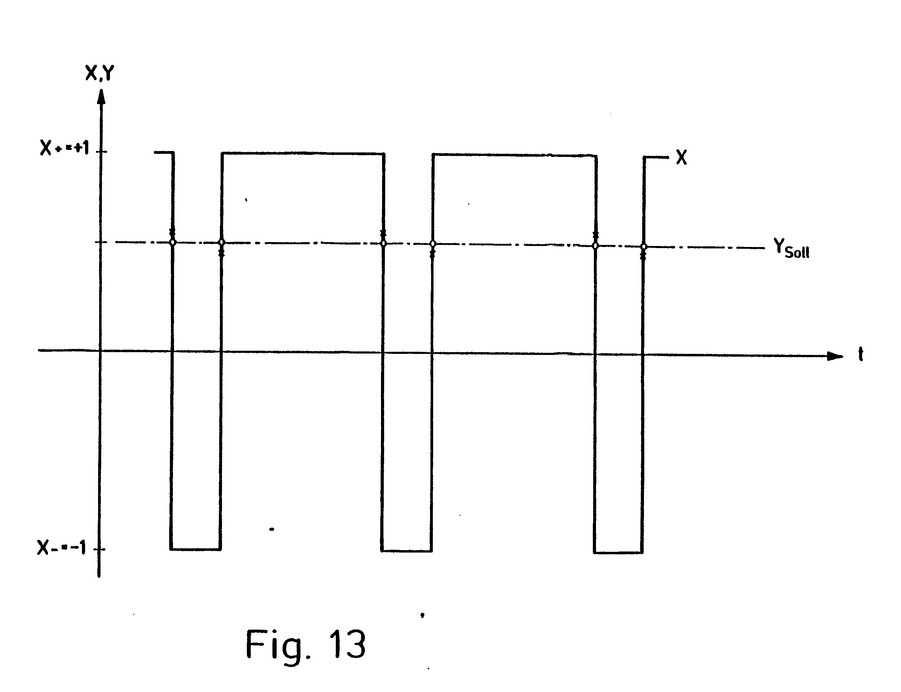

In Fig. 13 ist für einen bestimmten Verlauf von X der Verlauf von

$Y_{n_1}$ bzw. $Y_{soll}$ bezeichnet den Sollwert des dem Drehmoment proportionalen Signals.

Die Werte von

$Y_{n_1}$, die sich jeweils nach Abschluß eines

Zyklus ergeben, sind durch ein Kreuz gekennzeichnet. Sie weichen vom Sollwert noch um einen bestimmten Betrag ab. Die Werte von Y am Ausgang des Addierers 51, die sich ebenfalls jeweils nach Abschluß eines Zyklus ergeben, sind durch Kreise gekennzeichnet. Sie weichen nur noch um einen sehr geringen Betrag vom Sollwert ab.

Der Vorteil dieses Filters gegenüber einem konventionellen digitalen Tiefpassfilter liegt darin, daß bei üblichen Tiefpassfiltern zur Erzielung gleicher Filtereigenschaften ein sehr hoher Filtergrad realisiert werden muß, die bei jenen Filtern notwendige Multiplikationsstufen entfallen. Im Vergleich zur digitalen Integration entfällt die zur Ermittlung des Drehmomentsignals notwendige Divisionsstufe.

## Patentansprüche

1. Schaltungsanordnung zur Messung des Drehmoments, der Drehschwingungen sowie der Leistung an mindestens einer umlaufenden Welle, mit Signalgebern und Signalaufnehmern sowie einem Multiplizierer und einer Signalauswertung, dadurch gekennzeichnet, daß ein Frequenzumsetzer (7) vorgesehen ist, mit dem aus einer der Frequenzen ($f_1$ oder $f_2$), der Signale ($S_1$ oder $S_2$) der Signalaufnehmer (2) ein neues Signal ($S_3$) erzeugbar ist, dessen Frequenz ($f_3$) der Summen- oder Differenzfrequenz der Frequenzen ($f_1$, $f_2$) der Signale der Signalaufnehmer (2) entspricht und das mit dem Signal ($S_1$ oder $S_2$), aus dem es gewonnen wird, phasenstarr verbunden ist, wobei die Zuordnung der Anfangsphase des neuen Signals ($S_3$) zum frequenzerzeugenden Signal ($S_1$ oder $S_2$) der Signalaufnehmer (2) durch das andere Signal ($S_2$ oder $S_1$) mitbestimmt wird, und daß die Signale ($S_1$, $S_2$) der Signalaufnehmer (2) und das Signal ($S_3$) des Frequenzumsetzers (7) zu dem Multiplizierer (8) geführt sind.

2. Schaltungsanordnung nach Anspruch 1, dadurch gekennzeichnet, daß bei Systemen miteinander formschlüssig gekoppelter Wellen, auch in Schaltgetrieben, mindestens je ein Signalgeber (1) an einer Welle vorgesehen ist.

3. Schaltungsanordnung nach Anspruch 1 oder 2, dadurch gekennzeichnet, daß die Frequenz ($f_3$) des Signals ($S_3$) des Frequenzumsetzers (7) aus einem der Signale ($S_1$ oder $S_2$) der Signalaufnehmer (2) mit niedrigerer Frequenz ($f_1$ oder $f_2$) erzeugt wird, und daß die Signalgeber (1) und die Signalaufnehmer (2) relativ zueinander so angeordnet sind, daß im unbelasteten Zustand mindestens einmal innerhalb der kleinsten gemeinsamen Periodendauer (T) zu einem bestimmten Zeitpunkt ein Nulldurchgang der Pulsfolge eines Signals ($S_1$ oder $S_2$) der Signalaufnehmer (2) und die Pulsmitte des Signals ($S_3$) des Frequenzumsetzers (7) zusammenfallen, wobei der Nulldurchgang jener Pulsfolge ($S_1$ oder $S_2$) zugeordnet ist, deren Frequenz ($f_1$ oder $f_2$) eine geradzahlige Vielfache der Grundfrequenz ($f_0$) ist, wobei die Grundfrequenz ($f_0$) den Kehrwert der kleinsten gemeinsamen Periodendauer (T) darstellt.

4. Schaltungsanordnung nach Anspruch 1 oder 2, dadurch gekennzeichnet, daß die Frequenz ($f_3$) des Signals

(S$_3$) des Frequenzumsetzers (7) aus einem der Signale (S$_1$ oder S$_2$) der Signalaufnehmer (2) mit höherer Frequenz (f$_1$ oder f$_2$) erzeugt wird und daß die Signalgeber (1) und die Signalaufnehmer (2) relativ zueinander so angeordnet sind, daß im unbelasteten Zustand mindestens einmal innerhalb der kleinsten gemeinsamen Periodendauer (T) zu einem bestimmten Zeitpunkt die Nulldurchgänge der Pulsfolgen aller Signale (S$_1$, S$_2$, S$_3$) zusmmenfallen.

5. Schaltungsanordnung nach einem der Ansprüche 1 bis 4, dadurch gekennzeichnet, daß der Frequenzumsetzer (7) einen Frequenzteiler (11) aufweist, der die Frequenzen (f$_1$ oder f$_2$) der Signale (S$_1$ oder S$_2$) der Signalaufnehmer (2) durch einen ganzzzahligen Faktor teilt, sowie eine Schaltung (12) vorgesehen ist, mit der die Anfangsphase des Signals (S$_3$) des Frequenzumsetzers (7) gegenüber den Signalen (S$_1$, S$_2$) der Signalaufnehmer (2) in die vorbestimmte Beziehung gesetzt wird.

6. Schaltungsanordnung nach Anspruch 5, dadurch gekennzeichnet, daß dem Frequenzteiler (11) ein Taktgenerator (10) vorgeschaltet ist, der über eine Phasenregelschleife (13, 14, 15) auf die Frequenz (f$_1$ oder f$_2$) der Signale (S$_1$ oder S$_2$) der Signalaufnehmer (2) oder auf ein Vielfaches dieser Frequenz (f$_1$ oder f$_2$) synchronisiert ist.

7. Schaltungsanordnung nach Anspruch 5 oder 6, dadurch gekennzeichnet, daß zur Erzielung der geforderten Phasenbeziehung zwischen den Signalen (S$_1$, S$_2$, S$_3$) ein Code in Speichern (25, 26) abgelegt ist, welcher der der geforderten Phasenbeziehung zugehörigen Flankenfolge der Signale (S$_1$, S$_2$) der Signalaufnehmer (2) entspricht, und daß ein Flankendetektor (21) für die Signale (S$_1$, S$_2$) der Signalaufnehmer (2) mit nachgeschaltetem Schieberegister (22) vorgesehen ist und die in den Speichern (25, 26) abgelegten Codes mit der in das Schieberegister (22) eingelesenen Flankenfolge der Signale (S$_1$, S$_2$) der Signalaufnehmer in Komparatoren (23, 24) verglichen werden.

8. Schaltungsanordnung nach Anspruch 7, dadurch gekennzeichnet, daß die Ausgänge der Komparatoren (23, 24) zu UND-Gattern (27, 29) geführt sind, welche bei Übereinstimmung der eingelesenen Flankenfolge mit dem gespeicherten Code, den aus der Phasenregelschleife (16, 17, 18, 19, 20) erzeugten Impuls weiterleiten, wobei über ein RS-Flipflop (28) das Signal (S$_3$) erzeugt wird.

9. Schaltungsanordnung nach Anspruch 5 oder 6, dadurch gekennzeichnet, daß zur Erzielung der gemäß Anspruch 3 geforderten Phasenbeziehung zwischen den Signalen (S$_1$, S$_2$, S$_3$) in den Signalzweigen (S$_1$, S$_2$) der Signalaufnehmer (2) je ein Inverter (31, 32) und UND-Gatter (33, 34, 35) vorgesehen sind, wobei die UND-Gatter (34, 35) je nach dem Zustand der Signale (S$_1$, S$_2$) der Signalaufnehmer (2) das von der Phasenregelschleife (16, 17, 18, 19, 20) erzeugte Signal zu den entsprechenden Eingängen eines RS-Flipflops (36) weiterleiten oder nicht.

10. Schaltungsanordnung nach einem der Ansprüche 1 bis 9, dadurch gekennzeichnet, daß dem Multiplizierer (8) ein Integrator (9) nachgeschaltet ist, mit dem aus der torsionsbedingten Verdrehung der Signalgeber (1) zueinander das Maß für das Drehmoment aus der Integration des vom Multiplizierer (8) gelieferten Signals (S$_1$.S$_2$.S$_3$) über eine oder mehrere der kleinsten gemeinsamen Periodendauern der Frequenzen (f$_1$, f$_2$, f$_3$) ermittelt wird.

11. Schaltungsanordnung nach einem der Ansprüche 7 bis 9, dadurch gekennzeichnet, daß dem Multiplizierer (8) ein digitales Filter nachgeschaltet ist, mit dem durch zeitdiskrete Abtastung aus der Pulsfolge des vom Multiplizierer (8) gelieferten Signals (S$_1$.S$_2$.S$_3$) bei jedem Abtastwert nach jedem Nulldurchgang ein Signal erzeugbar ist, das ein Maß für die torsionsbedingte Verdrehung der Signalgeber (1) zueinander darstellt.

12. Schaltungsanordnung nach Anspruch 11, dadurch gekennzeichnet, daß ein Taktgenerator (38) vorgesehen ist, mit dem entsprechend der Abtastrate innerhalb der kleinsten gemeinsamen Periodendauer (T) fortlaufend Signale erzeugt werden und der bei jeder Flanke der Pulsfolge des Signals (S$_1$.S$_2$.S$_3$) ein weiteres Signal generiert, und daß das Ausgangssignal eines Subtrahierers (39) auf einem Zweig über einen Zwischenspeicher (40) an einen Eingang und auf einem anderen Zweig über einen bit-Verschieber (41) und einen Zwischenspeicher (42) an den anderen Eingang des Subtrahierers (39) im Takte des vom Taktgenerator (38) erzeugten Abtastsignals zurückgeführt wird und daß in einem Addierer (45) der aktuelle Signalwert der Pulsfolge (S$_1$.S$_2$.S$_3$) sowie das Signal des Subtrahierers (39) geführt werden, und daß ein weiterer Subtrahierer (43) vorgesehen ist, mit dem vom Ausgangssignal des Addierers (45) der jeweils andere Signalwert der Pulsfolge (S$_1$.S$_2$.S$_3$) abgezogen und beim Vorliegen einer Flanke der Pulsfolge (S$_1$. S$_2$.S$_3$) in den Zwischenspeicher (40) und über einen bit-Verschieber (44) in den Zwischenspeicher (42) anstelle von am Ausgang des Subtrahierers (39) anliegenden Werte übernommen werden, wobei das am Ausgang des Addierers (45) anliegende Signal ein Maß für Drehmoment darstellt.

13. Schaltungsanordnung nach Anspruch 12, dadurch gekennzeichnet, daß das am Ausgang des Addierers (45) anliegende Signal bei jeder Flanke der Pulsfolge (S$_1$. S$_2$.S$_3$) in ein Schieberegister (50) geführt wird, wobei der Anzahl der Speicherzellen der Anzahl der Flanken der Pulsfolge (S$_1$.S$_2$.S$_3$) innerhalb der kleinsten gemeinsamen Periodendauer (T) oder innerhalb einem Vielfachen davon entspricht und daß in einem Addierer (51) die Signalwerte der Einzelspeicher addiert werden.

14. Schaltungsanordnung nach einem der Ansprüche 17 bis 13, dadurch gekennzeichnet, daß zur Erzielung einer optimalen Einschwingverhaltens und einer optimalen Genauigkeit die Abtastrate des Taktgenerators (38) und die Anzahl der bit-Verschiebungen in bit-Verschieber (41, 44) aneinander angepaßt werden.

15. Schaltungsanordnung nach einem der Ansprüche 1 bis 14, dadurch gekennzeichnet, daß zur Ermittlung der Leistung dem Addierer (47) ein Subtrahierer (52) nachgeschaltet ist, mit dem der Ausgangswert des Addierers (51) im unbelasteten Zustand vom aktuellen Ausgangswert abgezogen wird, und daß ein Akkumulator (53) vorgesehen ist, in dem für eine bestimmte Zeitdauer die Ausgangswerte des Subtrahierers (52) aufaddiert werden, wobei der am Ende der bestimmten Zeitdauer erreichte Wert ein Maß für die Leistung darstellt.

## Claims

1. System for measuring the torque, the torsional vibrations and the power on at least one rotating shaft, with emitters and sensors as well as a multiplier and a signal processor, comprising: providing a frequency converter (1) by means of which a new signal ($S_3$) can be generated from one of the frequencies ($f_1$ or $f_2$) of the signals ($S_1$ or $S_2$) of the sensors (2), the frequency ($f_3$) of said new signal ($S_3$) corresponding to the sum or difference frequency of the frequencies ($f_1$, $f_2$) of the signals of the sensors (2) and said new signal being phase-locked to the signal ($S_1$ or $S_2$) from which it is generated, the relation between the initial phase of said new signal (3) and the frequency-generating signal ($S_1$ or $S_2$) of the sensors (2) being also determined by the other signal ($S_2$ or $S_1$); and feeding the signals ($S_1$, $S_2$) of the sensors (2) and the signal ($S_3$) of the frequency converter (7) to the multiplier (8).

2. System as claimed in claim 1, wherein, in the case of systems of positive-locking shafts, also in gear boxes, at least one emitter (1) is provided on one shaft.

3. System as claimed in claim 1 or claim 2, wherein the frequency ($f_3$) of the signal ($S_3$) of the frequency converter (7) is generated from that of the signals ($S_1$ or $S_2$) of the sensors (2) which has the lower frequency ($f_1$ or $f_2$), and wherein the emitters (1) and the sensors (2) are arranged in such a way with respect to each other that, in no-load condition, a zero-axis crossing of the pulse train of a signal ($S_1$ or $S_2$) of the sensors (2) coincides with the pulse center of the signal ($S_3$) of the frequency converter (7) at a specific point of time, at least once within the least common period (T), the zero-axis crossing being that of the pulse train ($S_1$ or $S_2$) whose frequency ($f_1$ or $f_2$) is an even-numbered multiple of the fundamental frequency ($f_0$), said fundamental frequency ($f_0$) representing the reciprocal of the least common period (T).

4. System as claimed in claim 1 or claim 2, wherein the frequency ($f_3$) of the signal ($S_3$) of the frequency converter (7) is generated from that of the signals ($S_1$ or $S_2$) of the sensors (2) which has the higher frequency ($f_1$ or $f_2$), and wherein the emitters (1) and the sensors (2) are arranged in such a way with respect to each other that, in no-load condition, the zero-axis crossings of the pulse trains of all signals ($S_1$, $S_2$, $S_3$) coincide at a specific point of time at least once within the least common period (T).

5. System as claimed in any of the claims 1 to 4, wherein the frequency converter (7) is provided with a frequency divider (11) which divides the frequencies ($f_1$ or $f_2$) of the signals ($S_1$ or $S_2$) of the sensors (2) by an integer factor, and wherein a circuitry (12) is provided, by means of which the initial phase of the signal ($S_3$) of the frequency converter (7) is brought into the predetermined relation to the signals ($S_1$, $S_2$) of the sensors (2).

6. System as claimed in claim 5, wherein a clock generator (10) is connected at the input of the frequency divider (11) and, via a phase-locked loop (13, 14, 15), is synchronized, to the frequency ($f_1$ or $f_2$) of the signals ($S_1$ or $S_2$) of the sensors (2) or to a multiple of said frequency ($f_1$ or $f_2$).

7. System as claimed in claim 5 or claim 6, wherein, in order to achieve the required phase relation between the signals ($S_1$, $S_2$, $S_3$), a code is stored in memories (25, 26), said code corresponding to the edge sequence of the signals ($S_1$, $S_2$) of the sensors (2) that is relevant to the required phase relation, and wherein an edge detector (21) for the signals ($S_1$, $S_2$) of the sensors (2) is provided, a shift register (22) being connected at the output of said edge detector, and wherein the codes filed in the memories (25, 26) are compared in comparators (23, 24) with the edge sequence of the signals ($S_1$, $S_2$) of the sensors (2) read into the shift register (22).

8. System as claimed in claim 7, wherein the output of the comparators (23, 24) are fed to AND gates (27, 29) which, in case of conformity of the input edge sequence with the stored code, forward the pulse generated from the phase-locked loop (16, 17, 18, 19, 20), the signal ($S_3$) being generated from these pulses via an R-S flip-flop (28).

9. System as claimed in claim 5 or claim 6, wherein, in order to achieve the phase relation between the signals ($S_1$, $S_2$, $S_3$) which is required according to claim 3, one inverter (31, 32) and one AND gate (33, 34, 35) are provided in each of the signal paths ($S_1$, $S_2$) of the sensors (2), the signal generated by the phase-locked loop (16, 17, 18, 19, 20) being fed or not being fed by the AND gates (34, 35) to the respective inputs of an R-S flip-flop (36), depending on the state of the signals ($S_1$, $S_2$) of the sensors (2).

10. System as claimed in any of the claims 1 to 9, wherein an integrator (9) is connected at the output of the multiplier (8), said integrator being used to determine from the torsion-dependent twist of the emitters (1) with respect to each other the measure of torque by integration of the signal ($S_1.S_2.S_3$) supplied by the multiplier (8) over one or several of the least common periods of the frequencies ($f_1$, $f_2$, $f_3$).

11. System as claimed in any of the claims 1 to 9, wherein a digital filter is connected at the output of the multiplier (8), said digital filter being suitable for generating a signal by time-discrete scanning from the pulse train of the signal ($S_1.S_2.S_3$) supplied by the multiplier (8) at each scanning value after each zero-axis crossing, said signal being a measure of the torsion-dependent twist of the emitters (1) with respect to each other.

12. System as claimed in claim 11, wherein a clock generator (38) is provided which continuously generates signals within the least common period (T) according to the sampling rate, and which generates a further signal at each edge of the pulse train of the signal ($S_1.S_2.S_3$), and wherein, in accordance with the sampling signal generated by the clock generator (38), the output signal of a subtracter (39) is returned on one path, via a buffer (49) to one input, and on another path, via a bit shifter (41) and a buffer (42), to the other input of the subtracter (39), and wherein the actual signal value of the pulse train $(S_1.S_2.S_3)$ and the signal of the subtracter (39) are fed to an adder (43), and that a further subtracter (43) is provided by means of which the respective other signal value of the pulse train $(S_1.S_2.S_3)$ is subtracted from the output signal of the adder (45) and, in the case of the accurrence of an edge of the pulse train $(S_1.S_2.S_3)$ fed into one buffer (40) and via a bit shifter (44), into another buffer (42), instead of the output values of the subtracter (39), the signal that is available at the output of the adder (45) being a measure of torque.

13. System as claimed in claim 12, wherein the signal available at the output of the adder (45) is, at each edge of the pulse train $(S_1.S_2.S_3)$, fed into a shift register (50), the number of memory cells corresponding to the number of edges of the pulse train $(S_1. S_2.S_3)$ within the least common period (T) or within a multiple of said least common period (T), and wherein the signal values of the individual memory cells are added in an adder (51).

14. System as claimed in any of the claims 11 to 13, wherein, in order to achieve optimum transient response and optimum accuracy, the sampling rate of the clock generator (38) and the number of bit shifts in the bit shifters (41, 44) are adapted to each other.

15. System as claimed in any of the claims 1 to 14, wherein, in order to determine the power, a subtracter (52) is connected at the output of the adder (41) said subtracter subtracting the output value of the adder (51) in no-load condition from the actual output value, and wherein an accumulator (53) is provided in which the output values of the subtracter (52) are added for a specific period of time, the value reached at the end of the specific period of time being a measure of power.

## Revendications

1. Circuit de mesure du moment, couple de rotation, des oscillations ainsi que la puissance d'au moins un arbre rotatif à l'aide de générateurs de signaux et de capteurs de signaux ainsi que d'un multiplicateur et d'un circuit d'exploitation des signaux, circuit caractérisé par un convertisseur de fréquence (7) qui génère un nouveau signal $(S_3)$ à partir du signal $(S_1$ ou $S_2)$ du récepteur de signal (2) à partir des fréquences $(f_1$ et $f_2)$, nouveau signal dont la fréquence $(f_3)$ correspond à la somme ou à la différence des fréquences $(f_1$ et $f_2)$ du signal du récepteur de signal (2), et qui est déphasée de manière fixe par rapport au signal $(S_1$ ou $S_2)$ dont il découle, l'association de la phase initiale du nouveau signal $(S_3)$ par rapport au signal générateur de fréquence $(S_1$ ou $S_2)$ fourni par le récepeur de signal (2) est déterminée par l'autre signal $(S_2$ ou $S_1)$ et en ce que les signaux $(S_1, S_2)$ du récepteur de signal (2) et le signal $(S_3)$ du convertisseur de fréquence (7) sont appliqués au multiplicateur (8).

2. Circuit selon la revendication 1, caractérisé en ce que dans le cas de systèmes dont les arbres sont couplés l'un sur l'autre par une liaison par la forme, ainsi que dans les transmissions ou boîtes de vitesses, on a au moins un générateur de signal (1) sur chaque arbre.

3. Circuit selon la revendication 1 ou 2, caractérisé en ce que la fréquence $(f_3)$ du signal $(S_3)$ du convertisseur de fréquence (7) est formée à partir de l'un des signaux $(S_1$ ou $S_2)$ du récepteur de signaux (2) avec une basse fréquence $(f_1$ ou $f_2)$ et en ce que le générateur de signaux (1) ou le récepteur de signaux (2) sont montés l'un par rapport à l'autre pour qu'au moins à l'état non chargé, au moins une fois au cours de la plus petite période commune (T), à un instant déterminé, on a la coïncidence entre le passage par zéro de la suite des impulsions d'un signal $(S_1$ ou $S_2)$ du récepteur de signaux (2) et le milieu de l'impulsion du signal $(S_3)$ du convertisseur de fréquence (7), le passage par zéro étant associé à celles des suites d'impulsions $(S_1$ ou $S_2)$ dont la fréquence $(f_1$ ou $f_2)$ est un multiple pair de la fréquence fondamentale $(f_o)$, cette fréquence fondamentale $(f_o)$ représentant la valeur d'inversion de la plus petite période commune (T).

4. Circuit selon la revendication 1 ou 2, caractérisé en ce que la fréquence $(f_3)$ du signal $(S_3)$ du convertisseur de fréquence (7) est formée à partir de l'un des signaux $(S_1$ ou $S_2)$ du récepteur de signaux (2) à la fréquence la plus élevée $(f_1$ ou $f_2)$ et en ce que le générateur de signaux (1) et le récepteur de signaux (2) sont associés relativement l'un par rapport à l'autre pour qu'à l'état non chargé, au moins au cours de la plus petite période commune (T), à un instant déterminé, le passage par zéro des suites d'impulsions de tous les signaux $(S_1, S_2, S_3)$ coïncide.

5. Circuit selon l'une des revendications 1 à 4, caractérisé en ce que le convertisseur de fréquence (7) comprend un diviseur de fréquence (11) qui divise les fréquences $(f_1$ ou $f_2)$ des signaux $(S_1,$ ou $S_2)$ des récepteurs de signaux (2) par un nombre entier, le circuit comprenant un circuit (12) qui établit une relation prédéterminée entre la phase initiale du signal $(S_3)$ fourni par le convertisseur de fréquence (7) et les signaux $(S_1, S_2)$ des récepteurs de signaux (2).

6. Circuit selon la revendication 5, caractérisé en ce que le diviseur de fréquence (11) est précédé par un générateur de cadence (10) qui est synchronisé par une boucle de régulation de phase (13, 14, 15) à la fréquence $(f_1$ ou $f_2)$ des signaux $(S_1$ ou $S_2)$ des récepteurs de signaux (2) ou sur un multiple de cette fréquence $(f_1$ ou $f_2)$

7. Circuit selon la revendication 5 ou 6, caractérisé en ce que pour établir la relation de phase entre les signaux $(S_1, S_2, S_3)$, les mémoires (25, 26) contiennent un code qui correspond à la relation de phase exigée entre la suite respective des flancs des signaux ($S_1$, $S_2$) fournis par les récepteurs de signaux (2) ainsi que par un détecteur de flanc (21) pour les signaux ($S_1$ - $S_2$) fournis par les récepteurs de signaux (2), détecteur suivi par un registre à décalage (22) et en ce que les codes inscrits dans les mémoires (25, 26) sont comparés à la succession de flancs des signaux ($S_1$, $S_2$) des récepteurs de signaux, inscrits dans le registre à décalage (22), la comparaison se faisant dans des comparateurs (23, 24).

8. Circuit selon la revendication 7, caractérisé en ce que les informations fournies par les comparateurs (23, 24) sont appliquées à des portes ET (27, 29) qui en cas de coïncidence entre la suite des flancs inscrits et le code mis en mémoire transmettent l'impulsion générée par la boucle de régulation de phase (16, 17, 18, 19, 20), le signal ($S_3$) étant fourni par un flip-flop RS (28).

9. Circuit selon la revendication 5 ou 6, caractérisé en ce que pour établir la relation de phase selon la revendication 3 entre les signaux ($S_1$, $S_2$, $S_3$), les branches pour les signaux ($S_1$, $S_2$) pour les récepteurs de signaux (2) comportent chacune un inverseur (31, 32) et des portes ET (33, 34, 35) et suivant l'état des signaux ($S_1$, $S_2$) fournis par les récepteurs de signaux (2), les portes ET (34, 35) transmettent ou bloquent le signal engendré par les boucles de régulation de phase (16, 17, 18, 19, 20) aux entrées correspondantes d'un flip-flop (36).

10. Circuit selon l'une des revendications 1 à 9, caractérisé en ce que le multiplicateur (8) est suivi par un intégrateur (9) qui partant de la rotation des générateurs de signaux engendrée par la torsion, fournit une mesure du moment par l'intégration du signal ($S_1.S_2.S_3$) fourni par le multiplicateur (8) sur une ou plusieurs des périodes communes les plus petites des fréquences ($f_1$, $f_2$, $f_3$).

11. Circuit selon l'une des revendications 1 à 9, caractérisé en ce que le multiplicateur (8) est suivi par un filtre numérique qui effectue une détection chronologique discrète de la suite des impulsions du signal ($S_1.S_2.S_3$) fourni par le multiplicateur (8) et à chaque valeur de détection après chaque passage par zéro, il fournit un signal qui est une mesure de la rotation respective des générateurs de signaux (1) en fonction de la torsion.

12. Circuit selon la revendication 11, caractérisé par un générateur de cadence (38) qui génère en continu des signaux dans la plus petite période commune (T) en fonction de la fréquence de détection, et qui pour chaque flanc de la suite des impulsions du signal ($S_1.S_2.S_3$) génère un autre signal et en ce que le signal de sortie d'un soustracteur (39) est appliqué en retour sur une entrée de ce soustracteur par l'intermédiaire d'une branche passant par une mémoire intermédiaire (40) et sur l'autre entrée en passant par une branche comportant un registre de décalage de bits (41) et une mémoire intermédiaire (42), à la fréquence d'un signal de détection fourni par le générateur de cadence (38) et en ce qu'un additionneur (45) reçoit la valeur réelle du signal de la suite d'impulsions ($S_1.S_2.S_3$) ainsi que le signal du soustracteur (39), un autre soustracteur (43) retranchant du signal de sortie de l'additionneur (45) chaque fois l'autre valeur de signal de la suite d'impulsions ($S_1.S_2.S_3$) et en présence d'un flanc de la suite d'impulsions ($S_1.S_2.S_3$), le signal est inscrit dans la mémoire intermédiaire (40) et en passant par un registre de décalage de bits (44) dans la mémoire intermédiaire (42) au lieu de recevoir les valeurs disponibles à la sortie du soustracteur (39), le signal appliqué à la sortie de l'additionneur (45) constituant une mesure du moment.

13. Circuit selon la revendication 12 caractérisé en ce que le signal fourni à la sortie de l'additionneur (45) est appliqué pour chaque flanc de la suite d'impulsions ($S_1.S_2.S_3$) dans un registre à décalage (50), le nombre des cellules de mémoire correspondant au nombre des flancs de la suite des impulsions ($S_1.S_2.S_3$) à l'intérieur de la plus petite période commune (T) ou d'un multiple de cette période et en ce qu'un additionneur (51) additionne les valeurs des signaux des mémoires uniques.

14. Circuit selon l'une des revendications 11 à 13, caractérisé en ce que pour avoir une oscillation propre optimale et une précision optimale, on adapte la fréquence de détection fournie par le générateur d'horloge (38) et le nombre de décalages de bits dans un registre à décalage de bits (41, 44).

15. Circuit selon l'une des revendications 1 à 14, caractérisé en ce que pour déterminer la puissance, l'additionneur (41) est suivi par un soustracteur (52) qui retranche de la valeur de sortie réelle la valeur de sortie de l'additionneur (51) correspondant à l'état non chargé, et un accumulateur (53) qui additionne pendant une durée déterminée les valeurs de sortie du soustracteur (52), la valeur atteinte à la fin de la durée déterminée représentant une mesure de la puissance.

$S_1$

$S_2$

$S_3$

$S_1 \cdot S_2 \cdot S_3$

$\Delta t$

$T$

$T_A$

$t$

$\int_0^\tau S_1 \cdot S_2 \cdot S_3\, dt$

$\int_0^T S_1 \cdot S_2 \cdot S_3\, dt$

$0$

$T$

$t$

Fig.1

$$\frac{1}{T}\int_0^T S_1 \cdot S_2 \cdot S_3 \; dt$$

$-T/6$  $T/6$  $T/3$  $T/2$

$0$

$\Delta t$

## Fig.2

$$\frac{1}{T}\int_0^T S_1 \cdot S_2 \cdot S_3 \; dt$$

$T/4$  $T/2$

$0$

$\Delta t$

## Fig.5

Fig.3

Fig.4

0 203 934

Fig.6

a)

b)

Fig. 7

$S_1$

$S_2$

$S_3$

0 203 934

Fig. 8

0 203 934

Fig.9

Fig.10

Fig. 11

Fig. 12

X,Y

X + = +1

X

$Y_{Soll}$

t

X - = -1

## Fig. 13